# EUROPÄISCHE PATENTSCHRIFT

(11) **EP 1 770 372 B1**
(45) Veröffentlichungstag und Bekanntmachung des Hinweises auf die Patenterteilung: **14.10.2015**
(21) Anmeldenummer: 06014999.4
(22) Anmeldetag: 19.07.2006
(51) Int. Cl.: G01D 5/245, G01D 5/347

(54) **Positionsmesseinrichtung**
Position measuring device
Dispositif de mesure de position

(30) Priorität: 01.10.2005 DE 102005047258
(43) Veröffentlichungstag der Anmeldung: 04.04.2007
(73) Patentinhaber: Dr. Johannes Heidenhain GmbH, 83301 Traunreut (DE)
(72) Erfinder: Ehrenberg, Jörn, 83278 Traunstein (DE); Meyer, Hermann, 83458 Schneizlreuth (DE); Strasser, Erich, 83308 Trostberg (DE)

(56) Entgegenhaltungen:
- EP-A1- 1 457 762
- DE-A1- 2 817 172
- DE-A1- 19 821 467
- DE-U1- 8 309 161
- JP-A- 11 132 792

## Beschreibung

Die Erfindung betrifft eine Positionsmesseinrichtung zur Messung von Längen- und/oder Winkelpositionen nach dem Oberbegriff von Anspruch 1.

Positionsmesseinrichtungen sind aus einer Vielzahl von Druckschriften bekannt. Sie dienen der Messung von Längen oder Winkeln bei Maschinen und Einrichtungen. Derartige Positionsmesseinrichtungen bestehen im wesentlichen aus einer Maßverkörperung, auf der eine oder mehrere Codespuren aufgebracht sind, und einer Abtasteinheit, die die Codespuren abtastet und Weg- bzw. Winkeländerungen in elektrische Signale umwandelt. Im Falle eines Winkelmessgeräts kann es sich bei der Maßverkörperung beispielsweise um eine Codescheibe handeln, auf der die Codespuren konzentrisch angeordnet sind. Bei Längenmessgeräten ist die Maßverkörperung bevorzugt als Maßstab ausgebildet.

Weiter sind Positionsmesseinrichtungen, insbesondere Winkelmessgeräte, bekannt, die neben der Codescheibe zur Erfassung des Drehwinkels einer Welle noch weitere Maßverkörperungen in Form von weiteren Codescheiben enthalten, mit denen die Anzahl der absolvierten Umdrehungen erfasst wird.

Dazu werden diese zusätzlichen Codescheiben über ein Untersetzungsgetriebe angetrieben, das die Drehzahl der Welle in geeigneter Weise reduziert. Derartige Winkelmessgeräte werden auch als Multiturn-Drehgeber bezeichnet.

Ebenso sind Längenmessgeräte bekannt, deren Maßstab in mehrere, aufeinander folgende Positionsabschnitte unterteilt ist, in denen sich die Codierung der Codespuren in Messrichtung zyklisch wiederholt. Zur Zählung der zurückgelegten Positionsabschnitte sind eine oder mehrere Codescheiben vorgesehen, die beim Abtasten des Maßstabs, analog zum Multiturn-Drehgeber, über ein Untersetzungsgetriebe angetrieben werden.

Positionsmesseinrichtungen, die mehrere Maßverkörperungen enthalten, erfordern einen aufwendigen mechanischen und elektrischen Aufbau, der wiederum hohe Herstellungskosten zur Folge hat. Ein wesentliches Kriterium sind dabei die Abtasteinheiten zum Ablesen der Codespuren der einzelnen Maßverkörperungen. Im Falle einer optischen Abtastung beispielsweise bestehen die Abtasteinheiten im wesentlichen aus einer Beleuchtungseinheit, deren Licht von der abzulesenden Codespur moduliert wird und einer Detektoreinheit, die das modulierte Licht empfängt und in elektrische Positionssignale umwandelt. Werden für die Abtastung der einzelnen Maßverkörperungen eigene, räumlich voneinander getrennt angeordnete Abtasteinheiten benötigt, so hat das einen erheblichen Einfluss auf die Komplexität der Positionsmesseinrichtung.

Ein Beispiel für eine derartige Positionsmesseinrichtung ist in der DE2817172C2 beschrieben. Dabei handelt es sich um einen mehrstufigen Winkelschrittgeber mit einer ersten Winkelschritt-Codescheibe und mehreren nachgeschalteten Winkelschritt-Codescheiben. Die Codescheiben sind in zwei Ebenen angeordnet, wobei sich die nachgeschalteten Winkelschritt-Codescheiben gemeinsam auf einer Ebene befinden. Alle Codescheiben werden separat an räumlich voneinander getrennten Abtaststellen abgelesen. Deshalb wird für jede Codescheibe eine eigene Abtasteinheit in Form einer Lichtquelle und dazugehörigen fotoelektrischen Zellen benötigt. Der erforderliche mechanische und elektrische Aufbau ist sehr komplex und kostenintensiv.

Um einen einfachen und preisgünstigen Aufbau zu erreichen, ist man daher bestrebt, die Zahl der benötigten Abtasteinheiten zu reduzieren. So beschreiben die JP11132792A2 und die JP63237616A2 absolute Multiturn-Drehgeber mit je einer Codescheibe zur Ermittlung der Winkelposition einer Welle, sowie einer weiteren Codescheibe zur Zählung der absolvierten Umdrehungen der Welle. Die beiden Codescheiben sind über ein Untersetzungsgetriebe verbunden und ihre Codespuren werden je an nur einer Stelle abgetastet. Nachteil dieser Anordnungen ist es, dass jeweils nur eine Codescheibe zur Zählung der Umdrehungen vorgesehen ist, wodurch die Anzahl der zählbaren Umdrehungen eingeschränkt ist.

Die EP1457762A1 beschreibt eine Vorrichtung zur Messung der Position, des Weges oder des Drehwinkels eines Objektes. Sie enthält drei Maßverkörperungen in Form von drei aufeinander folgenden Codescheiben, die über ein Differenzzahngetriebe gekuppelt sind. Die Abtastung der Codescheiben erfolgt durch eine die Codespuren sämtlicher Codescheiben radial überdeckende Abtasteinheit. Allerdings beschreibt diese Schrift lediglich eine Vorrichtung zur Zählung von durchlaufenen Messwertzyklen bzw. Positionsbereichen. Für die Positionsmessung innerhalb der Positionsbereiche finden sich keine Hinweise. Sie muss jedoch separat an einer anderen Stelle erfolgen und erfordert daher eine weitere Abtasteinheit.

Es ist daher Aufgabe der Erfindung, eine Positionsmesseinrichtung mit einer gegenüber dem Stand der Technik verbesserten Anordnung der Maßverkörperungen anzugeben.

Diese Aufgabe wird gelöst durch eine Positionsmesseinrichtung nach Anspruch 1. Vorteilhafte Details dieser Positionsmesseinrichtung ergeben sich aus den von Anspruch 1 abhängigen Ansprüchen.

Es wird nun eine Positionsmesseinrichtung zur Messung von Längen- und/oder Winkelpositionen vorgeschlagen, mit einer ersten Maßverkörperung mit einer ersten Codespur, mit der aufeinander folgende Positionsbereiche zyklisch messbar sind und wenigstens zwei Multiturn-Codescheiben mit zweiten Codespuren, über deren Winkelposition der aktuell gemessene Positionsbereich der ersten Codespur bestimmbar ist. Die erste Maßverkörperung und die wenigstens zwei Multiturn-Codescheiben sind so angeordnet, dass die erste Codespur durch ein erstes Abtastfenster und die zweiten Codespuren durch zweite Abtastfenster von einer gemeinsamen Abtasteinheit abtastbar sind.

In einer Ausführungsform ist die erste Maßverkörperung eine Singleturn-Codescheibe mit einer ersten Codespur, mit der die Winkelposition einer Welle messbar ist. In diesem Fall entspricht eine volle Umdrehung der Singleturn-Codescheibe einem Positionsbereich. Aus der Winkelposition der zwei Multiturn-Codescheiben ist die Anzahl der zurückgelegten Umdrehungen der Welle ermittelbar.

Besonders günstige Anordnungen ergeben sich, wenn sich die Drehachsen der Multiturn-Codescheiben innerhalb des Umfangs der Singleturn-Codescheibe befinden. Noch günstiger ist es, wenn sich die Flächen der Multiturn-Codescheiben komplett innerhalb des Umfangs der Singleturn-Codescheibe befinden, da dann die radiale Ausdehnung der Anordnung minimal ist.

In einer weiteren Ausführungsform ist die erste Maßverkörperung ein Maßstab, mit einer ersten Codespur, die in Messrichtung aufeinander folgende, absolut codierte Positionsbereiche aufweist. Die zwei Multiturn-Codescheiben befinden sich zusammen mit der Abtasteinheit in einem Abtastkopf, der in Messrichtung entlang des Maßstabes verfahrbar ist. Somit ist durch Abtastung der ersten Codespur die Position innerhalb des Positionsbereiches, in dem sich der Abtastkopf gerade befindet, messbar. Die zweiten Codescheiben werden über ein Untersetzungsgetriebe angetrieben, das so dimensioniert ist, dass aus ihrer Winkelposition die Anzahl der vom Abtastkopf passierten Positionsbereiche ermittelbar ist.

In diesem Fall ist es besonders günstig, wenn sich die Drehachsen der Multiturn-Codescheiben oder sogar die Flächen der Multiturn-Codescheiben innerhalb des Umfangs der Singleturn-Codescheibe befinden.

Besonders vorteilhaft ist es, wenn in der Abtasteinheit zur Abtastung aller Codespuren eine gemeinsame Beleuchtungseinheit und als Detektoreinheit ein Opto-ASIC eingesetzt wird.

Weitere Vorteile sowie Einzelheiten der vorliegenden Erfindung ergeben sich aus der nachfolgenden Beschreibung bevorzugter Ausführungsformen anhand der Figuren. Dabei zeigt
Figur 1 eine schematische Darstellung einer ersten Ausführungsform einer erfindungsgemäßen Positionsmesseinrichtung in der Draufsicht,
Figur 2 die in Figur 1 dargestellte Ausführungsform in einer Seitenansicht und
Figur 3 eine schematische Darstellung eines weiteren Ausführungsbeispiels einer erfindungsgemäßen Positionsmesseinrichtung.

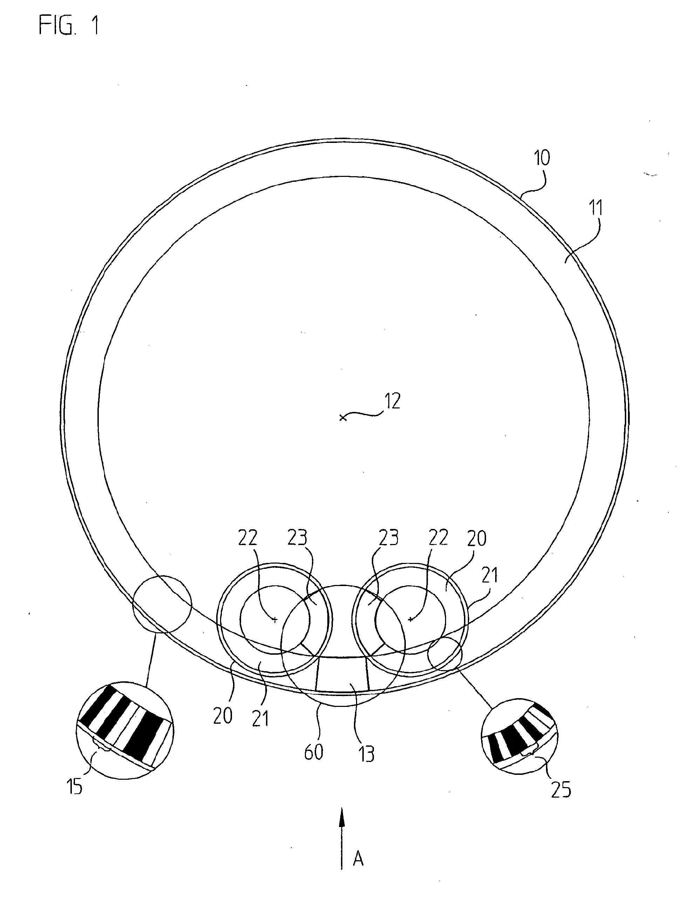

Figur 1 zeigt eine schematische Darstellung einer ersten Ausführungsform einer erfindungsgemäßen Positionsmesseinrichtung. Sie besteht aus einer ersten Maßverkörperung in Form einer Singleturn-Codescheibe 10, die drehfest mit einer Welle 12 verbunden ist. Auf der Singleturn-Codescheibe 10 ist, radial zum Mittelpunkt der Welle 12, eine erste Codespur 11 angeordnet, über die die Winkelposition der Singleturn-Codescheibe 10 und damit auch der Welle 12 messbar ist. Der Positionsbereich, der mit der ersten Codespur messbar ist, entspricht deshalb in diesem Beispiel einer vollen Umdrehung der Welle 12. Wird die Welle 12 nun beispielsweise von einem Motor angetrieben, so wird der Positionsbereich zyklisch abgetastet.

Zwei Multiturn-Codescheiben 20 mit zweiten Codespuren 21 sind oberhalb der Singleturn-Codescheibe 10 angeordnet. Sie sind um ihre Drehachsen 22 drehbar gelagert und können beispielsweise von der Welle 12 über ein Untersetzungsgetriebe so angetrieben werden, dass die Anzahl der zurückgelegten Umdrehungen der Welle 12 durch Kombination der Winkelpositionen der Multiturn-Codescheiben 20 ermittelbar ist. Die Drehachsen 22 sind parallel zur Drehachse der Welle 12 angeordnet.

Aus Gründen der Übersichtlichkeit wurde in Figur 1 darauf verzichtet, eine Abtasteinheit darzustellen. Statt dessen ist der Bereich, in dem die Abtastung der ersten Codespur 11 und der zweiten Codespuren 21 stattfindet, durch einen Beleuchtungskreis 60 gekennzeichnet. Innerhalb des Beleuchtungskreises 60 ergeben sich für die Abtastung der ersten Codespur 11 ein erstes Abtastfenster 13 und für die Abtastung der zweiten Codespuren 21 zweite Abtastfenster 23. Bei den Abtastfenstern 13, 23, die in Figur 1 eingezeichnet sind, handelt es sich um die maximale Größe von Ringsegmenten der Codespuren 11, 21, die einerseits vom Beleuchtungskreis 60 ausgeleuchtet werden und sich andererseits nicht gegenseitig überlappen.

Die tatsächlich genutzte Größe der Abtastfenster 13, 23 hängt unter anderem vom Aufbau der Codespuren 11, 21 ab, insbesondere davon, wie viele Codesegmente der Codespuren 11, 21 gleichzeitig abgetastet werden müssen, um eine sichere Positionsinformation zu erhalten. Weist beispielsweise die erste Codespur 11 eine Inkrementalteilung auf, also ein regelmäßiges, radiales Strichmuster, bei dem die Winkelposition Singleturn-Codescheibe 10 durch Zählung der einen Detektor passierenden Striche bezogen auf eine Referenzmarke bestimmt wird, so wird nur ein kleines Ringsegment für das Abtastfenster 13 benötigt.

In der Praxis werden in Positionsmessgeräten vermehrt absolut codierte Codespuren eingesetzt, da diese den Nachteil der Inkrementalteilungen vermeiden, nach dem Einschalten erst eine Referenzposition anfahren zu müssen, bevor ein absoluter Positionswert zur Verfügung steht. Besonders geeignet sind sogenannte Pseudo-Random-Codes (PRC). PRC bestehen aus einer unregelmäßigen Abfolge von lichtdurchlässigen und lichtundurchlässigen Codesegmenten, die über den Umfang der Codespur so angeordnet sind, dass sich für jeden Winkelschritt ein anderes, eindeutiges serielles Codewort ergibt und so jederzeit die aktuelle Winkelposition festgestellt werden kann.

Weiter ist es von Vorteil, wenn der PRC zusätzlich eine Manchester-Codierung aufweist. Ist beim PRC einer logischen "1" ein lichtdurchlässiges Codesegment zugeordnet und einer logischen "0" ein lichtundurchlässiges, so wird durch die Manchester-Codierung eine logische "1" beispielsweise durch ein Codesegment dargestellt, das in Messrichtung aus einem lichtundurchlässigen Bereich, gefolgt von einem lichtdurchlässigen Bereich besteht. Analog dazu besteht dann eine logische "0" aus einem lichtdurchlässigen Bereich, gefolgt von einem lichtundurchlässigen. Daraus folgt, dass nun auch Bitfolgen, die bei einem PRC aus aneinander gereihten lichtundurchlässigen Codesegmenten bestehen würden (beispielsweise "000" bei der oben beschriebenen Zuordnung), einen Übergang von einem lichtundurchlässigen zu einem lichtdurchlässigen Bereich oder umgekehrt aufweisen.

Da für die Abtastung von PRC, je nach Breite des auszuwertenden Codewortes, mehrere aufeinander folgende Codesegmente gleichzeitig erfasst werden müssen, sind größere Abtastfenster nötig.

In der Praxis sind auch kombinierte Codespuren bekannt, in denen beispielsweise neben einer absolut codierten Spur mit einem Pseudo-Random-Code mit Manchester-Codierung zusätzlich eine Inkrementalteilung angeordnet ist. Selbstverständlich sind auch derartige Codespuren im Rahmen der Erfindung einsetzbar.

In Figur 1 sind als Beispiel für Codespuren, bestehend aus einem PRC mit Manchester-Codierung, Ausschnitte der ersten Codespur 11 und der zweiten Codespur 21 vergrößert dargestellt. Zusätzlich sind beispielhaft ein Codesegment 15 der ersten Codespur 11, bzw. ein Codesegment 25 der zweiten Codespur 21 eingezeichnet.

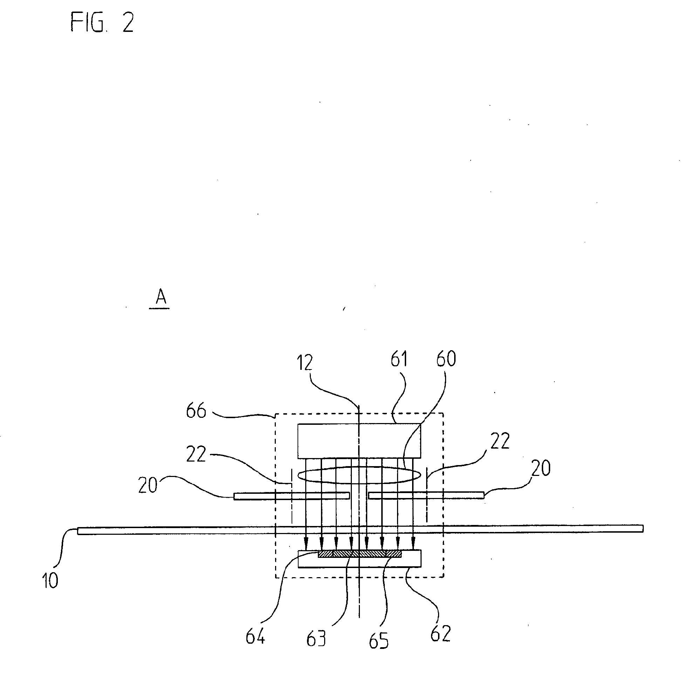

Figur 2 zeigt eine schematische Seitenansicht einer erfindungsgemäßen Positionsmessvorrichtung nach Figur 1 aus der durch den Pfeil A gekennzeichneten Richtung. Zusätzlich zu den in Figur 1 dargestellten Komponenten sind in Figur 2 eine Beleuchtungseinheit 61 und eine Detektoreinheit 62 für die Abtastung der ersten Codespur 11 der Singleturn-Codescheibe 10 und der zweiten Codespuren 21 der Multiturn-Codescheiben dargestellt. Die Beleuchtungseinheit 61 und die Detektoreinheit 62 bilden somit eine Abtasteinheit 66. Bereits in Figur 1 beschriebene Bestandteile der Positionsmessvorrichtung sind in Figur 2 mit den gleichen Bezugszeichen versehen.

Bei dem dargestellten Abtastprinzip handelt es sich um eine so genannte Durchlichtabtastung, d.h. die Codescheiben befinden sich zwischen der Beleuchtungseinheit 61 und der Detektoreinheit 62. Die Beleuchtungseinheit 61 sendet ein weitgehend paralleles Lichtbündel mit dem Durchmesser des Beleuchtungskreises 60 in Richtung der Codescheiben aus. Durch die Codespuren wird das Licht, je nachdem, ob es auf lichtdurchlässige oder lichtundurchlässige Codesegmente trifft, moduliert und trifft schließlich auf Sensorfelder 63, 64, 65 der Detektoreinheit 62, die das modulierte Licht in elektrische Positionssignale umwandeln und zur Weiterverarbeitung bereitstellen.

Die Beleuchtungseinheit 61 kann beispielsweise aus einer Leuchtdiode, insbesondere einer Infrarotleuchtdiode, bestehen, deren abgestrahltes Licht mittels einer Kondensorlinse parallel ausgerichtet wird. Um die Beleuchtungseinheit 61 einfach aufbauen zu können und eine hohe Beleuchtungsstärke zu erzielen, ist es vorteilhaft, den Durchmesser des Beleuchtungskreises 60 möglichst klein zu wählen. Bevorzugte Durchmesser liegen im Bereich kleiner 10 mm, mit Vorteil kleiner 6,5 mm.

In der Ausführungsform, wie sie in den Figuren 1 und 2 dargestellt ist, muss das Licht zur Abtastung der zweiten Codespuren 21 auch noch die Singleturn-Codescheibe 10 durchdringen. Deshalb muss die Singleturn-Codescheibe 10 im Bereich der Abtastfenster 23 aus einem lichttransparenten Material, z.B. aus Glas oder einem lichttransparenten Kunststoff gefertigt sein.

Für die Multiturn-Codescheiben ist es dagegen besonders vorteilhaft, wenn sie in Spritzgusstechnik aus einem lichtundurchlässigen Kunststoff hergestellt werden, denn bei diesem Herstellungsverfahren können sowohl die Codespuren (beispielsweise speichenförmig, als Folge von lichtundurchlässigen Stegen und lichtdurchlässigen Lücken), als auch eine Zahnung für den Antrieb der Codescheiben durch das Untersetzungsgetriebe in einem Arbeitsschritt mit eingespritzt werden.

Wie aus Figur 2 ersichtlich, sind die Multiturn-Codescheiben 20 nebeneinander in einer Multiturn-Messebene angeordnet, während sich die Singleturn-Codescheibe 10 auf einer dazu parallelen Singleturn-Messebene befindet. Diese Anordnung ist in der Praxis besonders günstig, da sie einen kleinen Abstand zwischen der Beleuchtungseinheit 61 und der Detektoreinheit 62 ermöglicht. Dadurch wird der Modulationsgrad der Positionssignale, die durch Abtastung der zweiten Codespuren 21 der in der Multiturn-Messebene angeordneten Multiturn-Codescheiben 20 gewonnen werden, nur unwesentlich beeinträchtigt. Zudem wird der Platzbedarf auch in axialer Richtung gesenkt.

Es sei an dieser Stelle ausdrücklich darauf hingewiesen, dass die Sensorfelder 63, 64, 65 nicht nur aus einzelnen Sensorelementen, sondern auch aus Gruppen von Sensoren, beispielsweise in Messrichtung hintereinander angeordnet, bestehen können. Anzahl und Anordnung der Sensorelemente ist abhängig von der vom Sensorfeld 63, 64, 65 auszuwertenden Codespur. Im dargestellten Beispiel ist das erste Sensorfeld 63 der Detektoreinheit 62 dem ersten Abtastfenster 13 zugeordnet und dient somit zur Abtastung der ersten Codespur 11. Analog dazu sind die Sensorfelder 64 und 65 den zweiten Abtastfenstern 23 zugeordnet, d.h. sie dienen zur Abtastung der zweiten Codespuren 21.

Besonders vorteilhaft ist es, wenn die Detektoreinheit 62 nicht aus vielen diskreten Bausteinen, wie z.B. einzelnen Photodioden oder Photodiodenarrays aufgebaut ist, sondern aus einem komplexen anwenderspezifischen Baustein besteht. Derartige Bausteine sind einschlägig als Opto-ASICs bekannt. Sie enthalten meist neben den Photoelementen auch Schaltungen zur Aufbereitung der von den Photoelementen aus dem empfangenen modulierten Licht gewonnenen elektrischen Positionssignale. Weiter sind häufig auch Schaltungen zur Interpolation von Positionssignalen, zu deren Digitalisierung, sowie Schnittstellenmodule zur Übertragung der Positionsinformation zu einer Folgeelektronik usw. bereits mit integriert. Durch den Einsatz eines Opto-ASICs als Detektoreinheit 62 kann im beschriebenen Ausführungsbeispiel das von der ersten Codespur 11 und den zweiten Codespuren 21 modulierte Licht an nur einer Stelle von nur einem Bauteil abgetastet und ausgewertet werden.

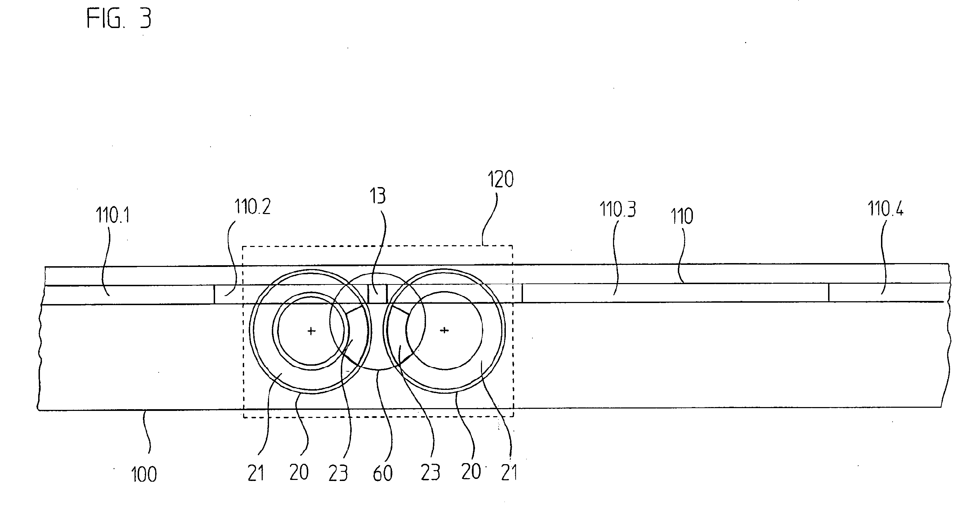

In den bisher beschriebenen Figuren wird die erste Maßverkörperung stets durch die Singleturn-Codescheibe 10 gebildet. Figur 3 zeigt dagegen eine schematische Darstellung eines weiteren Ausführungsbeispiels einer erfindungsgemäßen Positionsmesseinrichtung, bei der die erste Maßverkörperung ein Maßstab 100 ist. Bereits in den vorherigen Ausführungsbeispielen beschriebene Komponenten tragen das gleiche Bezugszeichen und werden nicht mehr detailliert beschrieben. Aus Gründen der Übersichtlichkeit wurde auf die Darstellung der Abtasteinheit 66, bestehend aus Beleuchtungseinheit 61 und Detektoreinheit 62, verzichtet. Statt dessen wird die Abtasteinheit 66, wie bereits in Figur 1, durch den Beleuchtungskreis 60 repräsentiert.

Auf dem Maßstab 100 ist eine erste Codespur 110 aufgebracht, die in mehrere Codeabschnitte 110.1, 110.2, 110.3, 110.4 unterteilt ist, in denen sich die Codierung der ersten Codespur 110 in Messrichtung wiederholt. In dieser Ausführungsform kann der Maßstab 100 beispielsweise mit einem ersten Objekt verbunden sein, während die Abtasteinheit und die Multiturn-Codescheiben 20 in einem Abtastkopf 120 integriert sind, der zur Messung des Verfahrweges bezogen auf den Maßstab 100 mit einem zweiten Objekt verbunden ist. Den Codeabschnitten 110.1, 110.2, 110.3, 110.4 sind damit Positionsbereiche zugeordnet, die durch Abtastung der Codeabschnitte 110.1, 110.2, 110.3, 110.4 zyklisch messbar sind. Bei dem ersten Objekt kann es sich beispielsweise um den Bearbeitungstisch einer Werkzeugmaschine, bei dem zweiten Objekt um einen Werkzeugschlitten handeln. Wird der Abtastkopf 120 mit dem Werkzeugschlitten entlang des Maßstabs 100 bewegt, so werden die Codeabschnitte 110.1, 110.2, 110.3, 110.4 der ersten Codespur 110 zyklisch abgetastet und so die aktuelle Position innerhalb der Positionsbereiche gemessen.

Die Multiturn-Codescheiben 20 werden, wenn der Abtastkopf 120 in Messrichtung am Maßstab 100 entlang verfahren wird, vom Maßstab 100 über ein Untersetzungsgetriebe so angetrieben, dass sie die Anzahl der Codeabschnitte 110.1, 110.2, 110.3, 110.4 zählen, die der Abtastkopf 120 passiert. Die Absolutposition kann dann aus dem zurückgelegten Weg innerhalb des Codeabschnitte 110.1, 110.2, 110.3, 110.4, in dem sich der Abtastkopf 120 befindet, und der Anzahl der passierten Codeabschnitte 110.1, 110.2, 110.3, 110.4 errechnet werden. Für den Antrieb des Getriebes kann am Maßstab 100 in Messrichtung beispielsweise eine Zahnung angeformt sein.

Auch in dieser Ausführungsform sind die Multiturn-Codescheiben 20 gegenüber dem Maßstab 100 so angeordnet, dass sich innerhalb des Beleuchtungskreises 60 Abtastfenster für die Abtastung der Codespuren ergeben, wobei die erste Codespur 110 im ersten Abtastfenster 13 und die zweiten Codespuren 21 in den zweiten Abtastfenstern 23 abtastbar sind. Dadurch ergeben sich die gleichen Vorteile, wie sie bei den vorhergehenden Beispielen beschrieben wurden.

Die vorliegende Erfindung ist nicht auf Durchlichtabtastung beschränkt, sondern ist auch für Auflichtabtastung geeignet. Bei der Auflichtabtastung befinden sich Beleuchtungseinheit und Detektoreinheit auf einer Seite der Codescheiben, bzw. des Maßstabs und die abzutastenden Codespuren bestehen aus reflektierenden und nicht reflektierenden Codesegmenten. Licht, das von der Beleuchtungseinheit in Richtung der Codescheiben, bzw. des Maßstabs ausgesendet wird, wird dabei von den reflektierenden Codesegmenten der Codespuren in Richtung der Detektoreinheit abgelenkt und auf diese Weise moduliert.

## Patentansprüche

1. Positionsmesseinrichtung zur Messung von Längen- und/oder Winkelpositionen, mit
- einer ersten Maßverkörperung (10, 100) mit einer ersten Codespur (11, 110), mit der aufeinander folgende Positionsbereiche zyklisch messbar sind,
- wenigstens zwei nebeneinander in einer Multiturn-Messebene angeordnete Multiturn-Codescheiben (20) mit zweiten Codespuren (21), über deren Winkelposition der aktuell gemessene Positionsbereich der ersten Codespur (10, 110) bestimmbar ist,
**dadurch gekennzeichnet, dass**
- die erste Maßverkörperung (10, 100) und die wenigstens zwei Multiturn-Codescheiben (20) so angeordnet sind, dass die erste Codespur (11, 110) durch ein erstes Abtastfenster (13) und die zweiten Codespuren (21) durch zweite Abtastfenster (23) von einer gemeinsamen Abtasteinheit (66) abtastbar sind,
- die Abtasteinheit (66) aus einer Beleuchtungseinheit (61) und einer Detektoreinheit (62) besteht und die Abtastung innerhalb eines Beleuchtungskreises (60) erfolgt und
- die erste Maßverkörperung (10, 100) eine drehfest mit einer Welle (12) verbundene Singleturn-Codescheibe (10) ist und ein Positionsbereich aus einer vollen Umdrehung der Welle (12) besteht und mit den wenigstens zwei Multiturn-Codescheiben (20) die Anzahl der zurückgelegten Umdrehungen der Welle (12) messbar ist.

2. Positionsmesseinrichtung nach Anspruch 1, **dadurch gekennzeichnet, dass** sich die erste Codespur (11) der Singleturn-Codescheibe (10) in einer Singleturn-Messebene befindet und sich die zweiten Codespuren (21) der wenigstens zwei Multiturn-Codescheiben (20) nebeneinander in einer Multiturn-Messebene befinden und die Singleturn-Messebene und die Multiturn-Messebene parallel zueinander angeordnet sind.

3. Positionsmesseinrichtung nach Anspruch 1 oder 2, **dadurch gekennzeichnet, dass** die Drehachsen (22) der Multiturn-Codescheiben parallel zur Drehachse der Welle (12) angeordnet sind.

4. Positionsmesseinrichtung nach Anspruch 3, **dadurch gekennzeichnet, dass** die Drehachsen (22) der Multiturn-Codescheiben (20) innerhalb des Umfangs der Singleturn-Codescheibe (10) angeordnet sind.

5. Positionsmesseinrichtung nach Anspruch 4, **dadurch gekennzeichnet, dass** die Flächen der Multiturn-Codescheiben (20) innerhalb des Umfangs der Singleturn-Codescheibe (10) angeordnet sind.

6. Positionsmesseinrichtung nach einem der vorhergehenden Ansprüche, **dadurch gekennzeichnet, dass** die Multiturn-Codescheiben (20) in einem Kunststoff-Spritzgussverfahren hergestellt sind und die zweiten Codespuren (21) in die Multiturn-Codescheiben (20) mit eingespritzt sind.

7. Positionsmesseinrichtung nach einem der vorhergehenden Ansprüche, **dadurch gekennzeichnet, dass** die Detektoreinheit (62) ein Opto-ASIC ist.

8. Positionsmesseinrichtung zur Messung von Längen- und/oder Winkelpositionen, mit
- einer ersten Maßverkörperung (10, 100) mit einer ersten Codespur (11, 110), mit der aufeinander folgende Positionsbereiche zyklisch messbar sind,
- wenigstens zwei nebeneinander in einer Multiturn-Messebene angeordnete Multiturn-Codescheiben (20) mit zweiten Codespuren (21), über deren Winkelposition der aktuell gemessene Positionsbereich der ersten Codespur (10, 110) bestimmbar ist,
**dadurch gekennzeichnet, dass**
- die erste Maßverkörperung (10, 100) und die wenigstens zwei Multiturn-Codescheiben (20) so angeordnet sind, dass die erste Codespur (11, 110) durch ein erstes Abtastfenster (13) und die zweiten Codespuren (21) durch zweite Abtastfenster (23) von einer gemeinsamen Abtasteinheit (66) abtastbar sind,
- die Abtasteinheit (66) aus einer Beleuchtungseinheit (61) und einer Detektoreinheit (62) besteht und die Abtastung innerhalb eines Beleuchtungskreises (60) erfolgt und
- die erste Maßverkörperung (10, 100) ein Maßstab (100) ist, der mit einem ersten Objekt verbunden ist, die erste Codespur (110) in Messrichtung aufeinander folgende, absolut codierte Codeabschnitte (110.1, 110.2, 110.3, 110.4) aufweist, die Positionsbereichen zugeordnet sind, und die wenigstens zwei Multiturn-Codescheiben (20) und die Abtasteinheit (66) in einem Abtastkopf (120) angeordnet sind, der mit einem zweiten Objekt verbunden ist und mit den wenigstens zwei Multiturn-Codescheiben (20) die Anzahl der vom Abtastkopf (120) passierten Positionsbereiche messbar ist.

9. Positionsmesseinrichtung nach Anspruch 8, **dadurch gekennzeichnet, dass** sich die erste Codespur (110) des Maßstabs (100) in einer Maßstabs-Messebene befindet und sich die zweiten Codespuren (21) der wenigstens zwei Multiturn-Codescheiben (20) nebeneinander in einer Multiturn-Messebene befinden und die Maßstabs-Messebene und die Multiturn-Messebene parallel zueinander angeordnet sind.

10. Positionsmesseinrichtung nach Anspruch 8 oder 9, **dadurch gekennzeichnet, dass** die Drehachsen (22) der Multiturn-Codescheiben (20) senkrecht zur Maßstabs-Messebene angeordnet sind.

11. Positionsmesseinrichtung nach Anspruch 10, **dadurch gekennzeichnet, dass** die Drehachsen (20) der Multiturn-Codescheiben (20) innerhalb der Fläche des Maßstabs (100) angeordnet sind.

12. Positionsmesseinrichtung nach Anspruch 11, **dadurch gekennzeichnet, dass** die Flächen der Multiturn-Codescheiben (20) innerhalb der Fläche des Maßstabs (100) angeordnet sind.

13. Positionsmesseinrichtung nach einem der Ansprüche 8 bis 12, **dadurch gekennzeichnet, dass** die Multiturn-Codescheiben (20) in einem Kunststoff-Spritzgussverfahren hergestellt sind und die zweiten Codespuren (21) in die Multiturn-Codescheiben (20) mit eingespritzt sind.

14. Positionsmesseinrichtung nach einem der Ansprüche 8 bis 13, **dadurch gekennzeichnet, dass** die Detektoreinheit (62) ein Opto-ASIC ist.

## Claims

1. Position measuring device for measuring length and/or angular positions, having
- a first material measure (10, 100) with a first code track (11, 110) with the aid of which successive position ranges can be measured cyclically,
- at least two multi-turn code discs (20), arranged next to one another in a multi-turn measuring plane, having second code tracks (21) via which angular position the currently measured position range of the first code track (11, 110) can be determined,
**characterized in that**
- the first material measure (10, 100) and the at least two multi-turn code discs (20) are arranged such that the first code track (11, 110) can be scanned by a first scanning window (13), and the second code tracks (21) can be scanned by second scanning windows (23) of a common scanning unit (66),
- the scanning unit (66) consists of an illumination unit (61) and a detector unit (62), and the scanning is performed within a circle of illumination (60), and
- the first material measure (10, 100) is a singleturn code disc (10) connected to a shaft (12) in a rotationally fixed fashion, and a position range consists of a full revolution of the shaft (12), and the number of revolutions of the shaft (12) that are covered can be measured with the aid of the at least two multi-turn code discs (20).

2. Position measuring device according to Claim 1, **characterized in that** the first code track (11) of the single-turn code disc (10) is located in a single-turn measuring plane, and the second code tracks (21) of the at least two multi-turn code discs (20) are located next to one another in a multi-turn measuring plane, and the single-turn measuring plane and the multi-turn measuring plane are arranged parallel to one another.

3. Position measuring device according to Claim 1 or 2, **characterized in that** the axes (22) of rotation of the multi-turn code discs are arranged parallel to the axis of rotation of the shaft (12).

4. Position measuring device according to Claim 3, **characterized in that** the axes (22) of rotation of the multi-turn code discs (20) are arranged within the periphery of the single-turn code disc (10).

5. Position measuring device according to Claim 4, **characterized in that** the surfaces of the multi-turn code discs (20) are arranged within the periphery of the single-turn code disc (10).

6. Position measuring device according to one of the preceding claims, **characterized in that** the multi-turn code discs (20) are produced in a plastic injectionmoulding process, and the second code tracks (21) are co-injected into the multi-turn code discs (20).

7. Position measuring device according to one of the preceding claims, **characterized in that** the detector unit (62) is an opto-ASIC.

8. Position measuring device for measuring length and/or angular positions, having
- a first material measure (10, 100) with a first code track (11, 110) with the aid of which successive position ranges can be measured cyclically,
- at least two multi-turn code discs (20), arranged next to one another in a multi-turn measuring plane, having second code tracks (21) via which angular position the currently measured position range of the first code track (11, 110) can be determined,
**characterized in that**
- the first material measure (10, 100) and the at least two multi-turn code discs (20) are arranged such that the first code track (11, 110) can be scanned by a first scanning window (13), and the second code tracks (21) can be scanned by second scanning windows (23) of a common scanning unit (66),
- the scanning unit (66) consists of an illumination unit (61) and a detector unit (62), and the scanning is performed within a circle of illumination (60), and
- the first material measure (10, 100) is a scale (100) which is connected to a first object, the first code track (110) has absolutely coded code segments (110.1, 110.2, 110.3, 110.4) which succeed one another in the measuring direction, the position ranges are assigned, and the at least two multi-turn code discs (20) and the scanning unit (66) are arranged in a scanning head (120) which is connected to a second object, and the number of the position ranges through which the scanning head (120) passes can be measured with the aid of the at least two multi-turn code discs (20).

9. Position measuring device according to Claim 8, **characterized in that** the first code track (110) of the scale (100) is located in a scale measuring plane, and the second code tracks (21) of the at least two multiturn code discs (20) are located next to one another in a multi-turn measuring plane, and the scale measuring plane and the multi-turn measuring plane are arranged parallel to one another.

10. Position measuring device according to Claim 8 or 9, **characterized in that** the axes (22) of rotation of the multi-turn code discs (20) are arranged perpendicular to the scale measuring plane.

11. Position measuring device according to Claim 10, **characterized in that** the axes (22) of rotation of the multi-turn code discs (20) are arranged within the surface of the scale (100).

12. Position measuring device according to Claim 11, **characterized in that** the surfaces of the multi-turn code discs (20) are arranged within the surface of the scale (100).

13. Position measuring device according to one of Claims 8 to 12, **characterized in that** the multi-turn code discs (20) are produced in a plastic injection-moulding process, and the second code tracks (21) are co-injected into the multi-turn code discs (20).

14. Position measuring device according to one of Claims 8 to 13, **characterized in that** the detector unit (62) is an opto-ASIC.

## Revendications

1. Dispositif de mesure de position destiné à mesurer des positions longitudinales et/ou angulaires, comportant
- un premier étalon de mesure (10, 100) ayant une première piste codée (11, 110) au moyen de laquelle des zones de position consécutives peuvent être mesurées de manière cyclique,
- au moins deux disques codés à tours multiples (20) disposés côte à côte dans un plan de mesure à tours multiples ayant des secondes pistes codées (21) par l'intermédiaire desquelles la position angulaire de la zone de position actuellement mesurée de la première piste codée (11, 110) peut être déterminée,
**caractérisé en ce que**
- le premier étalon de mesure (10, 100) et les au moins deux disques codés à tours multiples (20) sont disposés de telle manière que la première piste codée (11, 110) puisse être balayée à travers une première fenêtre de balayage (13) et à ce que les secondes pistes codées (21) puissent être balayées à travers des secondes fenêtres de balayage (23) par une unité de balayage commune (66),
- l'unité de balayage (66) est constituée d'une unité d'éclairage (61) et d'une unité de détection (62) et le balayage s'effectue à l'intérieur d'un cercle d'éclairement (60) et
- le premier étalon de mesure (10, 100) est un disque codé à un seul tour (10) relié solidaire en rotation à un arbre (12) et une zone de position est constituée d'un tour complet de l'arbre (12) et le nombre des tours parcourus par l'arbre (12) peut être mesuré à l'aide des au moins deux disques codés à tours multiples (20).

2. Dispositif de mesure de position selon la revendication 1, **caractérisé en ce que** la première piste codée (11) du disque codé à un seul tour (10) se trouve dans un plan de mesure à un seul tour et **en ce que** les secondes pistes codées (21) des au moins deux disques codés à tours multiples (20) se trouvent côte à côte dans un plan de mesure à tours multiples et **en ce que** le plan de mesure à un seul tour et le plan de mesure à tours multiples sont disposés parallèlement l'un à l'autre.

3. Dispositif de mesure de position selon la revendication 1 ou 2, **caractérisé en ce que** les axes de rotation (22) des disques codés à tours multiples sont disposés parallèlement à l'axe de rotation de l'arbre (12).

4. Dispositif de mesure de position selon la revendication 3, **caractérisé en ce que** les axes de rotation (22) des disques codés à tours multiples (20) sont disposés à l'intérieur de la circonférence du disque codé à un seul tour (10).

5. Dispositif de mesure de position selon la revendication 4, **caractérisé en ce que** les surfaces des disques codés à tours multiples (20) sont disposées à l'intérieur de la circonférence du disque codé à un seul tour (10).

6. Dispositif de mesure de position selon l'une quelconque des revendications précédentes, **caractérisé en ce que** les disques codés à tours multiples (20) sont fabriqués par un procédé de moulage par injection de matière plastique et **en ce que** les secondes pistes codées (21) sont injectées dans les disques codés à tours multiples (20).

7. Dispositif de mesure de position selon l'une quelconque des revendications précédentes, **caractérisé en ce que** l'unité de détection (62) est un circuit ASIC optique.

8. Dispositif de mesure de position destiné à mesurer des positions longitudinales et/ou angulaires, comportant
- un premier étalon de mesure (10, 100) comportant une première piste codée (11, 110) au moyen de laquelle des zones de position consécutives peuvent être mesurées de manière cyclique,
- au moins deux disques codés à tours multiples (20) disposés côte à côte dans un plan de mesure à tours multiples ayant des secondes pistes codées (21) par l'intermédiaire desquelles la position angulaire de la zone de position actuellement mesurée de la première piste codée (11, 110) peut être déterminée,
**caractérisé en ce que**
- le premier étalon de mesure (10, 100) et les au moins deux disques codés à tours multiples (20) sont disposés de telle manière que la première piste codée (11, 110) puisse être balayée à travers une première fenêtre de balayage (13) et à ce que les secondes pistes codées (21) puissent être balayées à travers des secondes fenêtres de balayage (23) par une unité de balayage commune (66),
- l'unité de balayage (66) est constituée d'une unité d'éclairage (61) et d'une unité de détection (62) et le balayage s'effectue à l'intérieur d'un cercle d'éclairement (60) et
- le premier étalon de mesure (10, 100) est une échelle (100) qui est reliée à un premier objet, **en ce que** la première piste codée (110) comprend des entailles de codage (110.1, 110.2, 110.3, 110.4) séquentielles codées de manière absolue, qui sont associées aux zones de position, et **en ce que** les au moins deux disques codés à tours multiples (20) et l'unité de balayage (66) sont disposés dans une tête de balayage (120) qui est reliée à un second objet et **en ce que** le nombre des zones de position par lesquelles passe la tête de balayage (120) peut être mesuré à l'aide des au moins deux disques codés à tours multiples (20).

9. Dispositif de mesure de position selon la revendication 8, **caractérisé en ce que** la première piste codée (110) de l'échelle (100) se trouve dans un plan de mesure de l'échelle et **en ce que** les secondes pistes codées (21) des au moins deux disques codés à tours multiples (20) se trouvent côte à côte dans un plan de mesure à tours multiples et **en ce que** le plan de mesure de l'échelle et le plan de mesure à tours multiples sont disposés parallèlement l'un à l'autre.

10. Dispositif de mesure de position selon la revendication 8 ou 9, **caractérisé en ce que** les axes de rotation (22) des disques codés à tours multiples (20) sont disposés perpendiculairement au plan de mesure de l'échelle.

11. Dispositif de mesure de position selon la revendication 10, **caractérisé en ce que** les axes de rotation (22) des disques codés à tours multiples (20) sont disposés à l'intérieur de la surface de l'échelle (100).

12. Dispositif de mesure de position selon la revendication 11, **caractérisé en ce que** les surfaces des disques codés à tours multiples (20) sont disposées à l'intérieur de la surface de l'échelle (100).

13. Dispositif de mesure de position selon l'une quelconque des revendications 8 à 12, **caractérisé en ce que** les disques codés à tours multiples (20) sont fabriqués par un procédé de moulage par injection de matière plastique et **en ce que** les secondes pistes codées (21) sont injectées dans les disques codés à tours multiples (20).

14. Dispositif de mesure de position selon l'une quelconque des revendications 8 à 13, **caractérisé en ce que** l'unité de détection (62) est un circuit ASIC optique.
